Europäisches Patentamt

European Patent Office

Office européen des brevets

(19)

(11) Numéro de publication : **0 037 770**
**B1**

(12) # FASCICULE DE BREVET EUROPÉEN

(45) Date de publication du fascicule du brevet :
13.06.84

(21) Numéro de dépôt : 81400490.9

(22) Date de dépôt : 27.03.81

(51) Int. Cl.³ : **H 04 B 7/185, H 04 L 7/04**

(54) **Système de transmission de données numériques par paquets utilisant un type particulier de mots de synchronisation.**

(30) Priorité : 03.04.80 FR 8007561

(43) Date de publication de la demande :
14.10.81 Bulletin 81/41

(45) Mention de la délivrance du brevet :
13.06.84 Bulletin 84/24

(84) Etats contractants désignés :
**BE DE GB IT NL SE**

(56) Documents cités :
**FR-A- 1 585 273**
**US-A- 3 777 062**
**IEEE TRANSACTIONS ON COMMUNICATION TECH-NOLOGY, vol. COM-16, no. 4, août 1968 New York, US SCHREMPP: "Unique word detection in digital burst communications" pages 597-605**
**IEEE INTERNATIONAL CONFERENCE ON COMMU-NICATIONS, San Francisco, 16-18 juin 1975 New York, US GABBARD: "The common TDMA terminal equipment for the telesat TDMA system", pages 44-16 à 44-21**

(73) Titulaire : **Bousquet, Jean-Claude**
**97, rue des Morillons**
**F-75015 Paris (FR)**

(72) Inventeur : **Bousquet, Jean-Claude**
**97, rue des Morillons**
**F-75015 Paris (FR)**

(74) Mandataire : **Mongrédien, André et al**
**c/o BREVATOME 25, rue de Ponthieu**
**F-75008 Paris (FR)**

EP 0 037 770 B1

Jouve, 18, rue St-Denis, 75001 Paris, France

# 0 037 770

**Description**

La présente invention a pour objet un système de transmission de données numériques par paquets. Elle trouve une application en télécommunications.

Dans les systèmes modernes de liaisons par satellites dits en « accès multiple par répartition dans le temps » (en abrégé « AMRT » et, en terminologie anglosaxonne, « TDMA »), les données sont transmises par paquets. Dans de tels systèmes, une station terrienne réceptrice doit, pour recueillir correctement les données transmises, reconstituer différentes cadences utilisées dans la station émettrice : fréquence de l'onde porteuse, rythme numérique et identifier le début du paquet. A cet effet, chaque paquet est précédé d'un préambule constitué d'une séquence de récupération de rythme suivie d'une combinaison choisie pour faciliter le repérage du début du paquet. Cette combinaison est appelée « mot unique ». L'invention porte plus particulièrement sur de tels mots et sur les moyens de les mettre en œuvre.

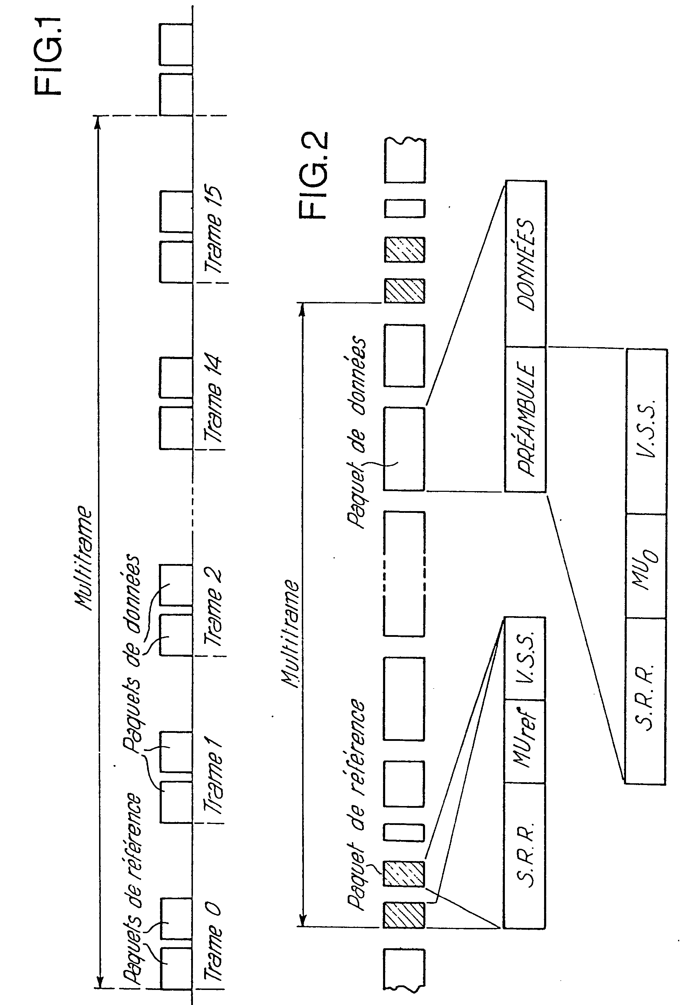

Le format d'une liaison de type AMRT est illustré sur la figure 1. Les données sont insérées dans un système de multitrame comportant, par exemple, seize trames numérotées de 0 à 15. La durée de chaque multitrame dépend des systèmes : elle est par exemple de 2 ms pour le système INTELSAT. La trame 0 contient des paquets de référence indiquant le début de la multitrame et les trames suivantes des paquets de données. La structure de ces paquets est illustrée schématiquement sur la figure 2.

Un paquet comprend un préambule, lequel est suivi de données s'il s'agit d'un paquet de données. Le préambule comprend tout d'abord une suite d'éléments binaires constituant une séquence de récupération de rythme (SRR) (en terminologie anglosaxonne : « carrier and bits timing recovery sequence »). En modulation de phase à deux états, cette séquence est constituée par une suite de « 0 » et de « 1 », un « 1 » indiquant un saut de phase de 180° et un « 0 » l'absence d'un tel saut.

Cette séquence de récupération de rythme est suivie d'un mot unique de synchronisation (en abrégé, par la suite : « MU »). Dans une multitrame, un mot unique particulier est utilisé dans les paquets de données : c'est le mot unique de données ($MU_0$). Mais un ou plusieurs mots uniques de référence ($MU_{ref}$) peuvent être employés dans les paquets de référence qui commencent la multitrame. Le préambule se termine par une voie de service et de signalisation (VSS).

Une telle organisation est décrite dans le document « IEE Transactions on Communication Technology », volume COM-16, N° 4, Août 1968, pages 597-605. Ce document décrit, de manière générale, un système de transmission de données numériques par paquets comprenant :

— des moyens d'émission aptes à former des paquets comprenant un préambule formé notamment d'une séquence d'éléments binaires de récupération de rythme suivie d'une combinaison d'éléments binaires appelée mot unique,

— des moyens de réception comprenant notamment un décodeur apte à détecter la présence d'un mot unique dans les signaux reçus.

Dans les spécifications relatives aux systèmes AMRT et notamment dans celles du système INTELSAT, il est prévu quatre mots uniques différents pour distinguer quatre types de paquets. L'application de telles normes nécessite la mise en œuvre de deux détecteurs de mots uniques. Ce point mérite qu'on s'y arrête si l'on veut bien comprendre la présente invention.

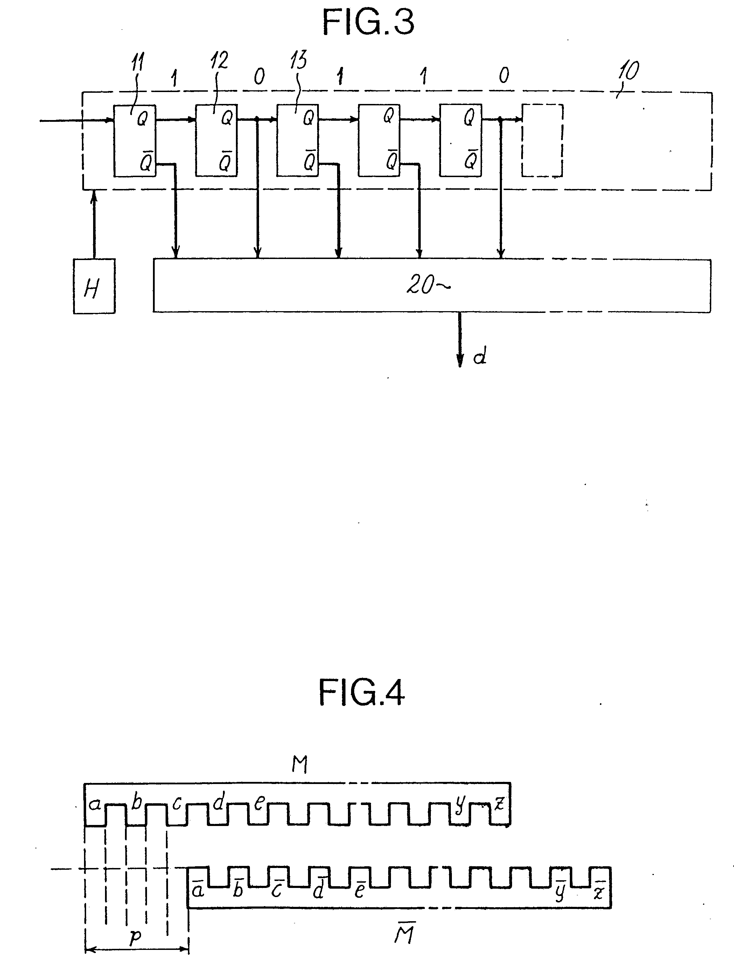

Un détecteur de mot unique est généralement constitué par un circuit tel que celui de la figure 3. Il comprend un registre à décalage 10 formé de bascules 11, 12, 13... à une entrée et deux sorties complémentaires Q et $\bar{Q}$. L'une ou l'autre de ces sorties est reliée à un additionneur 20. L'ensemble des sorties ainsi connectées correspond au complément du mot unique à détecter. Ainsi, si ce mot est par exemple 10110... les sorties des bascules qui sont reliées à l'additionneur sont la sortie $\bar{Q}$ pour la première, la sortie Q pour la seconde, la sortie $\bar{Q}$ pour la troisième, la sortie $\bar{Q}$ pour la quatrième, la sortie Q pour la cinquième, etc... Les signaux numériques parmi lesquels on recherche le mot unique en question sont introduits dans le registre à décalage 10. Ils y progressent à chaque impulsion d'une horloge de commande H. Lorsque le mot recherché remplit le registre, toutes les sorties des bascules qui sont reliées à l'additionneur d délivrent à ce dernier un « 0 ». L'additionneur 20 délivre un signal d qui est nul. Toute autre configuration du mot présent dans le registre donne un signal d différent de zéro.

Un tel circuit délivre donc un signal qui représente l'écart entre le mot recherché et le mot reçu. Cet écart est dit « distance de Hamming » : c'est très exactement le nombre d'éléments binaires de même rang qui diffèrent dans deux mots, ou encore le poids, modulo 2 n, de la somme de deux mots de n éléments binaires.

Ce rappel sur les détecteurs des mots uniques permet de comprendre que l'utilisation de plusieurs mots uniques différents implique l'utilisation de plusieurs détecteurs, puisque le branchement des bascules d'un détecteur est spécifique du mot à détecter. Or, ceci constitue un inconvénient majeur car de tels détecteurs sont onéreux. C'est ainsi par exemple que le document FR-A-1 585 273 décrit un système où l'on imbrique deux codes différents, choisis de telle sorte que leurs fonctions d'autocorrélation présentent une somme nulle pour toutes les valeurs du temps différentes d'un multiple du nombre d'éléments binaires du code. Dans un tel système, il est donc nécessaire d'utiliser, dans les moyens de réception, deux circuits différents adaptés aux deux mots différents imbriqués.

En plus de cet inconvénient, les systèmes de l'art antérieur en présentent deux autres, liés au fait que, en pratique, des erreurs de localisation du paquet sont possibles. En effet :

— la démodulation ou le décodage différentiel généralement utilisés ont pour effet de corréler fortement les erreurs sur les éléments binaires de symboles voisins alors que les erreurs sont indépendantes sur des éléments binaires distants de plus d'un symbole ;

— il est difficile de trouver un mot unique tel que lui-même et son complémentaire précédés chacun d'une même séquence de récupération de rythme possèdent une fonction d'autocorrélation optimale.

La présente invention a pour but de résoudre toutes ces difficultés. A cette fin, elle propose l'utilisation d'un mot unique de 2 n éléments binaires qui est constitué par deux mots uniques de n éléments binaires entrelacés et décalés. Le détecteur de mot unique utilisé est apte à traiter des mots de n éléments binaires et il reçoit alternativement la suite des éléments binaires de rang impair et pair du mot de 2 n éléments binaires.

De cette manière, l'invention procure, sur les systèmes de l'art antérieur, les avantages suivants :

— un seul détecteur de mot unique permet la détection de plusieurs mots uniques différents (selon le décalage des mots élémentaires qui les composent),

— un détecteur de mot unique de n éléments binaires permet la détection d'un mot unique de 2 n éléments binaires,

— la fonction d'intercorrélation du mot unique au préambule est améliorée parce que le détecteur de mot unique exploite un symbole sur deux,

— chaque mot unique de n éléments binaires est construit sur les symboles de rang de même parité de sorte que les erreurs sur les éléments binaires sont indépendantes.

De façon plus précise, l'invention a pour objet un système de transmission de données numériques par paquets comprenant :

— des moyens d'émission aptes à former des paquets comprenant un préambule formé notamment d'une séquence d'éléments binaires de récupération de rythme suivie d'une combinaison d'éléments binaires appelée mot unique,

— des moyens de réception comprenant notamment un décodeur apte à détecter la présence d'un mot unique dans les signaux reçus, ce système étant caractérisé en ce que :

A) les moyens d'émission sont aptes à former des mots uniques pris dans une famille de mots ayant chacun 2 n éléments binaires et étant formés d'un mot M de n éléments binaires entre lesquels sont intercalés les n éléments binaires du mot complémentaire $\bar{M}$, les éléments binaires de $\bar{M}$ étant décalés par rapport à ceux de M d'un nombre p de rangs, le choix de p définissant un mot unique de la famille,

B) dans les moyens de réception, le détecteur de mot unique est unique et fonctionne avec n éléments binaires, ce détecteur étant apte à détecter les apparitions décalées de p rangs des mots M et $\bar{M}$ sur chaque séquence d'éléments binaires de rang pair et impair.

De toute façon, les caractéristiques et avantages de l'invention apparaîtront mieux après la description qui suit, d'exemples de réalisation donnés à titre explicatif et nullement limitatif. Cette description se réfère à des dessins sur lesquels :

la figure 4 représente schématiquement la structure d'un mot unique selon l'invention,

la figure 5 représente les variations de la distance de Hamming entre un mot reçu et un mot unique de données $MU_0$ conforme à l'invention,

la figure 6 représente les variations de la distance de Hamming entre un mot reçu et un premier mot unique de référence $MU_{ref1}$ selon l'invention,

la figure 7 représente les variations de la distance de Hamming entre un mot reçu et un second mot unique de référence $MU_{ref2}$ selon l'invention,

la figure 8 représente les variations de la distance de Hamming entre un mot reçu et un troisième mot unique de référence $MU_{ref3}$ selon l'invention,

la figure 9 représente le schéma synoptique d'un détecteur de mot unique selon l'invention.

La figure 4 représente la structure d'un mot unique de 2 n éléments binaires conforme à l'invention. Un tel mot est composé d'un mot M de la forme :

$$a, b, c \dots y, z$$

entrelacé avec le mot complémentaire $\bar{M}$ de la forme :

$$\bar{a}, \bar{b}, \bar{c} \dots \bar{y}, \bar{z}$$

chacune des lettres indiquant un élément binaire égal à 0 ou à 1.

Le décalage entre les deux mots peut être quelconque et égal à un nombre p de périodes T du signal binaire.

Ainsi, pour un décalage d'une période, le mot unique à 2 n éléments binaires s'écrira :

$$a \; \bar{a} \; b \; \bar{b} \; c \; \bar{c} \dots y \; \bar{y} \; z \; \bar{z}, \text{ mot noté } (M, \bar{M}),$$

ou sous une forme complémentée équivalente :

$$\bar{a} \; a \; \bar{b} \; b \; \bar{c} \; c \dots \bar{y} \; y \; \bar{z} \; z, \text{ mot noté } (\bar{M}, M).$$

3

Ces mots sont associés respectivement aux séquences de récupération de rythme normale et complémentée, qui, en modulation de phase à deux états (en abrégé MDP2) sont de la forme générale :

$$0\ 1\ 0\ 1\ 0\ 1\ ...\ 0\ 1\ 0\ 1\ 0\ 1 \text{ séquence notée (0, 1)}$$

ou complémentée :

$$1\ 0\ 1\ 0\ 1\ 0\ ...\ 1\ 0\ 1\ 0\ 1\ 0 \text{ séquence notée (1, 0).}$$

Ces mots uniques possèdent les avantages suivants :
— l'alternance des éléments binaires voisins $(a, \bar{a})$ est favorable à la conservation du rythme, particulièrement utile en début de paquet ;
— pour un mot unique de 2 n éléments binaires un détecteur de mot unique de n éléments binaires suffit si ce détecteur voit passer alternativement les séquences d'éléments de rang pair et de rang impair, à savoir, dans l'exemple pris :

$$0\ 0\ 0\ 0\ ...\ 0\ 0\ 0\ 0, \text{ abc ... yz séquence notée (0, M),}$$

et :

$$1\ 1\ 1\ 1\ ...\ 1\ 1\ 1\ 1\ 1, \overline{abc} ... \overline{yz} \text{ séquence notée } (1, \bar{M}) ;$$

— si le mot unique choisi (0, M) possède des performances suffisantes, on est sûr que le mot unique associé $(1, \bar{M})$ possède les mêmes performances, alors que c'est rarement le cas pour les autres couples $(0, \bar{M})$ et (1, M) ;
— les n éléments binaires suffisent souvent à la poursuite du mot unique dans une fenêtre de quelques éléments binaires avec quelques erreurs. Les 2 n éléments binaires ne deviennent nécessaires que lors d'une recherche du mot unique sans erreur dans une large fenêtre en présence de bruit ;
— si $(M, \bar{M})$ est le mot unique choisi pour la station de référence, $(\bar{M}, M)$ sera le mot unique pour les autres stations. Dans ce cas, un seul détecteur suffit à la recherche et à la poursuite de ces deux mots uniques ;
— ce type de mot unique est utilisable dans le cas d'une transmission en MDP2 et quel que soit le type de réception :
démodulation différentielle,
ou démodulation cohérente suivie d'un décodage différentiel.

Quant au mot M de n éléments binaires choisi pour composer le mot unique à 2 n éléments binaires, il est avantageusement formé par une séquence pseudo-aléatoire. On sait que de telles séquences peuvent être engendrées à partir de polynômes particuliers, et pratiquement à l'aide de registres à décalage convenablement rebouclés sur eux-mêmes. Par exemple, à partir de la séquence d'ordre 4 : 1 1 1 1 et du polynôme de degré 4 : $x^3 + x^4$ on engendre la séquence pseudo-aléatoire S suivante :

$$S : .\ 1\ 1\ 1\ 1\ 0\ 0\ 0\ 1\ 0\ 0\ 1\ 1\ 0\ 1\ 0\ .\ 1\ 1\ 1\ 1\ ...$$

et la séquence complémentaire $\bar{S}$ :

$$\bar{S} : .\ 0\ 0\ 0\ 0\ 1\ 1\ 1\ 0\ 1\ 1\ 0\ 0\ 1\ 0\ 1\ .\ 0\ 0\ 0\ 0$$

A partir de l'une ou l'autre de ces séquences, on peut former un mot unique M (et son complément) en le commençant en un point quelconque de la séquence. De préférence, on débute la séquence de telle manière que les premiers éléments binaires prolongent la séquence de récupération de rythme. On peut adopter ainsi le mot M suivant obtenu en prélevant les éléments binaires de droite à gauche dans la séquence S, ce qui les range dans leur ordre d'émission et de réception :

$$M = 0\ 1\ 0\ 1\ 0\ 0\ 1\ 1\ 0\ 1\ 1\ 1\ 0\ 0\ 0\ 0$$

Le mot complémentaire est alors :

$$\bar{M} = 1\ 0\ 1\ 0\ 1\ 1\ 0\ 0\ 1\ 0\ 0\ 0\ 1\ 1\ 1\ 1$$

On supposera dans la suite de la description que c'est ce mot M qui est utilisé, sans que cela constitue évidemment une limitation à l'invention. Le mot unique global comprend alors $2 \times 16 = 32$ éléments binaires.

Avant d'étudier les performances des mots uniques de l'invention, on rappellera que, d'une manière générale, les performances d'un mot unique sont caractérisées par :
— la probabilité $P_1$ de non-détection quand il est émis,

— la probabilité $P_2$ de fausse détection anticipée quand il est émis,

— la probabilité $P_3$ de fausse détection dans le bruit quand il n'est pas émis pour différents taux d'erreur par élément binaire (en abrégé TEEB) dans le canal de transmission, ce taux variant en général de $10^{-2}$ à $10^{-6}$.

Des considérations classiques dans ce domaine, dont l'exposé sortirait du cadre de la présente description, permettent de calculer ces différentes probabilités ou tout au moins de les évaluer.

On rappellera simplement qu'un détecteur de mot unique calcule la distance d de Hamming du code reçu au code attendu (M) ou complémenté ($\bar{M}$) et que l'on peut tolérer k erreurs. D'une manière générale les critères de décision seront les suivants :

— si $d \leqslant k$, on décide que M a été émis et trouvé,

— si $d \geqslant n-k$ on décide que $\bar{M}$ a été émis et trouvé,

— si $k < d < n$ on décide que M et $\bar{M}$ ne sont pas trouvés.

En démodulation différentielle ou en démodulation cohérente suivie d'un décodage différentiel, les erreurs sur des éléments binaires voisins sont corrélées et les erreurs sur les éléments binaires pairs ou impairs sont indépendantes.

Les performances des mots uniques de l'invention sont décrites d'abord dans le cas d'une station ordinaire puis dans le cas d'une station de référence.

1) Station ordinaire :

Le préambule d'une station ordinaire Sn est constitué successivement :

— d'une séquence de récupération de rythme :

$$1\ 0\ 1\ 0\ 1\ 0 \ldots 1\ 0\ 1\ 0\ 1\ 0\ ;$$

d'une longueur égale à un multiple de 16 éléments binaires ;

— d'un mot unique $MU_0$ de $2 \times 16$ éléments binaires de la forme ($\bar{M}$, M) :

$$10.01.10.01.10.10.01.01.10.01.01.01.10.10.10.10.$$

Le détecteur de mot unique détermine la distance d du code attendu (M) au code reçu alternativement sur les éléments binaires pairs et impairs, suivi des données (X), soit respectivement :

$$1\ 1\ 1 \ldots 1\ 1\ 1, 1\ 0\ 1\ 0\ 1\ 1\ 0\ 0\ 1\ 0\ 0\ 0\ 1\ 1\ 1\ 1, X\ X\ X \ldots$$

et

$$0\ 0\ 0 \ldots 0\ 0\ 0, 0\ 1\ 0\ 1\ 0\ 0\ 1\ 1\ 0\ 1\ 1\ 1\ 0\ 0\ 0\ 0, X\ X\ X \ldots$$

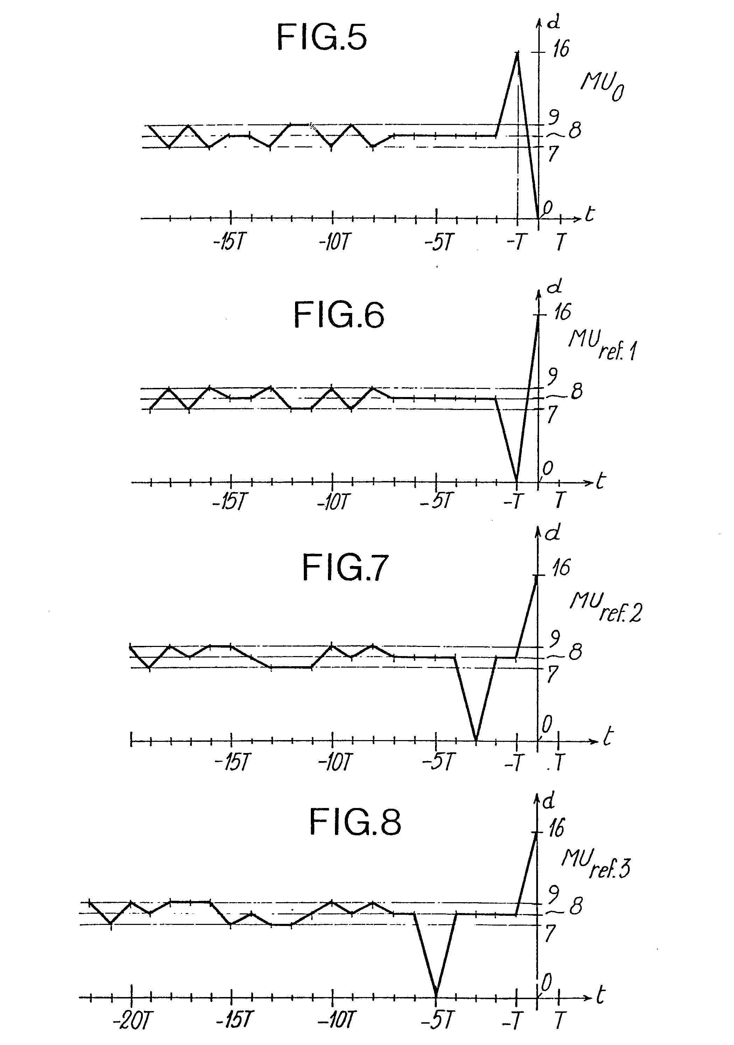

La distance d du mot unique attendu M au mot unique émis et décalé de n éléments est donnée par la figure 5 où le décalage, porté en abscisses, est exprimé en périodes T.

Les performances de ce mot unique sont différentes selon que le terminal AMRT est en mode synchronisé ou non :

a) Performances en mode non synchronisé :

Pendant la phase d'acquisition, le mot unique de la station locale est recherché dans une large fenêtre et on ne tolère aucune erreur ($k = 0$) parmi 32 éléments binaires.

La probabilité $P_3$ de fausse détection dans le bruit est :

$$P_3 : 1/2^{32} = 2,3\ 10^{-10}$$

Le détecteur de mot unique décide que le mot unique local est trouvé sans erreur si successivement :

$$d = 16 \text{ puis } d = 0$$

conformément à la figure 5.

La probabilité $P_1$ de non-détection du mot unique sans erreur est donnée pour différents TEEB dans le tableau I ci-joint.

b) Performances en mode synchronisé :

Une fois la synchronisation et l'acquisition réalisées, le mot unique de la station locale et ceux des stations distantes sont recherchés dans des fenêtres de quelques éléments binaires autour des positions nominales.

Le détecteur de mot unique décide que le mot unique d'une station ordinaire est trouvé avec au plus 4 erreurs parmi 16 éléments binaires si $d \leqslant 4$.

Les probabilités $P_1$ de non-détection du mot unique et $P_2$ de fausse détection anticipée pour une position donnée sont données pour différents TEEB dans le tableau II ci-joint.

2) Station de référence :

Le préambule de la station de référence est constitué successivement :
— d'une séquence de récupération de rythme :

$$010101\ldots010101$$

d'une longueur égale à un multiple de 16 éléments binaires ;
— d'un premier mot unique de référence ($MU_{ref1}$) de $2 \times 16$ éléments binaires de la forme $(M, \bar{M})$ :

$$01.10.01.10.01.01.10.10.01.10.10.10.01.01.01.01$$

Le détecteur de mot unique détermine la distance d du code attendu (M) :

$$M = 0101001101110000$$

au code reçu alternativement sur les éléments pairs et impairs, suivi des données (X) :

$$000\ldots000.0101001101110 00.XXX\ldots$$

et

$$111\ldots111.101011001000111.XXX \ldots$$

La distance d du mot unique attendu M au mot unique émis et décalé de n éléments binaires est donnée par la figure 6.

Comme pour le mot précédent, les performances du mot unique de référence sont différentes selon que le terminal AMRT est en mode synchronisé ou non :

a) Performances en mode non synchronisé :

Pendant la phase de synchronisation, le mot unique de la station de référence est recherché dans toute la trame. On ne tolère aucune erreur ($K = 0$) sur 32 éléments binaires.

La probabilité $P_3$ de fausse détection dans le bruit est :

$$P_3 = 1/2^{32} = 2{,}3 \ 10^{-10}$$

Le détecteur de mot unique décide que le mot unique de référence est trouvé sans erreur si successivement :

$$d = 0 \text{ puis } d = 16$$

conformément à la figure 6.

La probabilité $P_1$ de non-détection du mot unique sans erreur est donnée pour différents TEEB dans le tableau III ci-joint.

b) Performances en mode synchronisé :

Une fois la synchronisation réalisée, le mot unique de la station de référence est recherché dans une fenêtre de quelques éléments binaires autour de la position nominale.

Le détecteur de mot unique décide que le mot unique de référence est trouvé avec au plus 4 erreurs parmi 16 éléments binaires si $d \geqslant 12$.

Les probabilités $P_1$ de non-détection du mot unique et $P_2$ de fausse détection anticipée pour une position donnée sont données pour différents TEEB dans le tableau IV ci-joint.

Un second mot unique de référence ($MU_{ref2}$) peut être obtenu en décalant le mot $\bar{M}$ de 3 périodes par rapport à M. La distance de Hamming d varie alors comme représenté sur la figure 7. En mode non synchronisé, ce second mot de référence sera considéré comme émis et trouvé si, successivement, $d = 0$ puis $d = 16$ trois périodes plus tard.

En mode synchronisé, ce mot sera considéré comme trouvé avec quatre erreurs (ou moins) si $d \geqslant 12$.

Un troisième mot unique de référence $MU_{ref3}$ peut être obtenu en décalant le mot $\overline{M}$ de cinq périodes par rapport à M. La distance de Hamming $d$ varie alors comme représenté sur la figure 8.

En mode non synchronisé, ce troisième mot de référence sera considéré comme émis et trouvé si, successivement, $d = 0$ puis $d = 16$ cinq périodes plus tard.

En mode synchronisé, il sera considéré comme trouvé avec trois erreurs (ou moins) si $d \geqslant 12$.

D'autres mots de référence pourraient être formés selon le même principe.

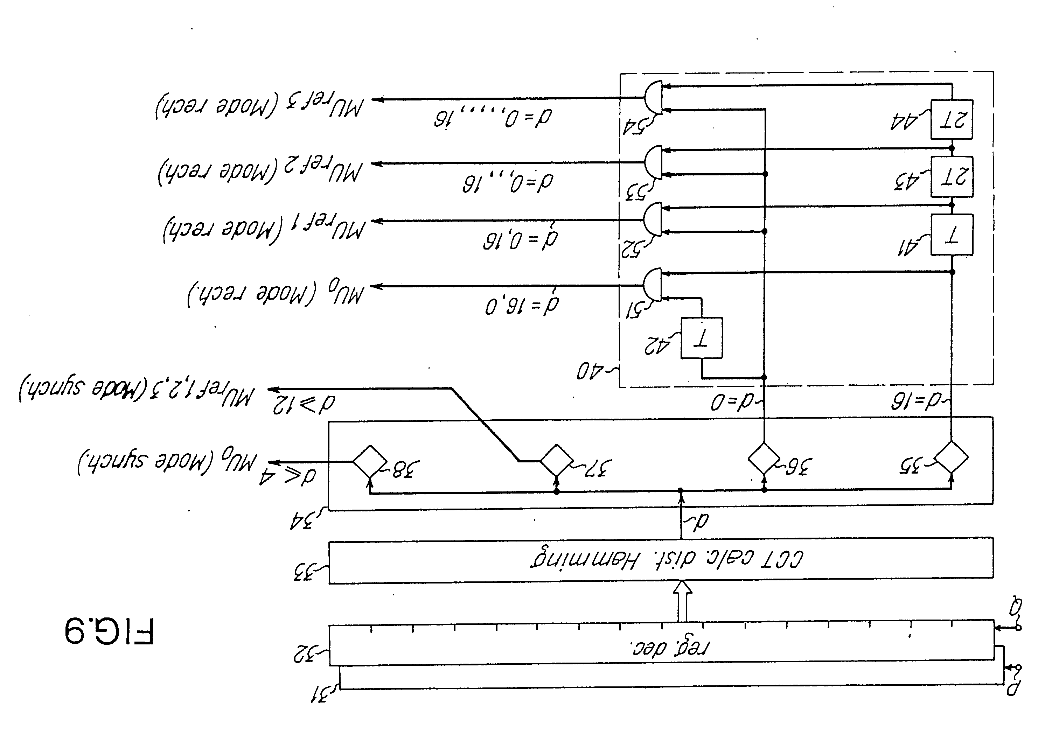

Les moyens permettant de mettre en œuvre ces mots de l'invention sont représentés sur la figure 9. Le circuit représenté comprend un double registre à décalage 31, 32 recevant les trains d'éléments binaires de rang impair (P) et pair (Q), un circuit 33 de calcul de la distance de Hamming d, un circuit 34 formé de comparateurs 35, 36, 37, 38 respectivement à 0, 4, 12 et 16, un circuit 40 formé de cellules à retard de 1 période (T) 41 et 42, de cellules à retard de 2 périodes (2T) 43 et 44 et de portes logiques de type ET 51, 52, 53 et 54.

Le fonctionnement de ce circuit est le suivant. Le signal numérique, scindé selon des moyens connus en un train P d'éléments impairs et un train Q d'éléments pairs, pénètre dans le double registre à décalage 31-32 de sorte que le circuit 34 voit passer alternativement les séquences paires et impaires qui ont été précisées plus haut. La distance d de Hamming commence à osciller entre les valeurs 7 et 9 comme indiqué sur les diagrammes des figures 5 à 8. Puis, lorsque le mot M remplit l'un ou l'autre des demi-registres 31 ou 32, la distance d tombe brutalement à 0, puis monte à valeur 16 lorsque le mot M remplit l'autre demi-registre. Le circuit 34 délivre des signaux indiquant les instants d'apparition de ces événements.

Ainsi, l'apparition de $d = 16$ suivie à une période de $d = 0$ fait apparaître deux signaux à l'entrée de la porte ET 51, laquelle délivre donc, à sa sortie, un signal qui marque la détection du mot unique de données $MU_0$ si l'on est en mode recherche, comme il a été expliqué plus haut.

L'apparition de $d = 0$ puis de $d = 16$ correspond à la détection du premier mot de référence $MU_{ref1}$ en mode recherche, ce qui est signalé à la sortie de la porte 52.

De la même manière, la sortie de la porte 53 signale la détection de $MU_{ref2}$ et celle de 54 la détection de $MU_{ref3}$, toujours en mode recherche.

Quant aux détections en mode synchronisé, elles sont signalées sur les connexions de sortie des comparateurs à 4 (pour $MU_0$) et à 12 pour $MU_{ref}$ 1, 2, 3.

En plus des avantages déjà indiqués, la mise en œuvre du mot unique conforme à l'invention en présente un autre qui est celui de permettre un lever d'ambiguïté dans le cas d'une modulation de phase à quatre états (MDP4). En effet, l'ordre dans lequel la distance de Hamming, sur chaque train pair ou impair, passe par les valeurs 0 et 2 n permet de lever l'ambiguïté de phase entre les deux porteuses correspondant à ces deux trains.

(Voir tableaux pages suivantes)

0 037 770

Tableau I

| TEEB | | $10^{-1}$ | $3.10^{-2}$ | $10^{-2}$ | $10^{-3}$ | $10^{-4}$ | $10^{-5}$ | $10^{-6}$ |
|---|---|---|---|---|---|---|---|---|
| $P_1$ | avec démod. cohérente | 0,97 | 0,62 | 0,28 | $3,2.10^{-2}$ | $3,2.10^{-3}$ | $3,2.10^{-4}$ | $3,2.10^{-5}$ |
| | avec démod. différentielle | 0,82 | 0,39 | 0,15 | $1,6.10^{-2}$ | $1,6.10^{-3}$ | $1,6.10^{-4}$ | $1,6.10^{-5}$ |

Tableau II

| TEEB | $10^{-1}$ | $3.10^{-2}$ | $10^{-2}$ | $10^{-3}$ | $10^{-4}$ | $10^{-5}$ | $10^{-6}$ |
|---|---|---|---|---|---|---|---|
| $P_1$ | $1,7.10^{-2}$ | $8,1.10^{-5}$ | $4,0.10^{-7}$ | $4,3.10^{-12}$ | $4,4.10^{-17}$ | $4,4.10^{-22}$ | $4,4.10^{-27}$ |
| $P_2$ | $2,1.10^{-3}$ | $4,0.10^{-5}$ | $6,2.10^{-7}$ | $6,9.10^{-11}$ | $7,0.10^{-15}$ | $7,0.10^{-19}$ | $7,0.10^{-23}$ |

Tableau III

| TEEB | | $10^{-1}$ | $3.10^{-2}$ | $10^{-2}$ | $10^{-3}$ | $10^{-4}$ | $10^{-5}$ | $10^{-6}$ |
|---|---|---|---|---|---|---|---|---|
| $P_1$ | avec démod. cohérente | 0,97 | 0,62 | 0,28 | $3,2.10^{-2}$ | $3,2.10^{-3}$ | $3,2.10^{-4}$ | $3,2.10^{-5}$ |
| | avec démod. différentielle | 0,82 | 0,39 | 0,15 | $1,6.10^{-2}$ | $1,6.10^{-3}$ | $1,6.10^{-4}$ | $1,6.10^{-5}$ |

Tableau IV

| TEBB | $10^{-1}$ | $3.10^{-2}$ | $10^{-2}$ | $10^{-3}$ | $10^{-4}$ | $10^{-5}$ | $10^{-6}$ |
|---|---|---|---|---|---|---|---|
| $P_1$ | $1,7.10^{-2}$ | $8,1.10^{-5}$ | $4,0.10^{-7}$ | $4,3.10^{-12}$ | $4,4.10^{-17}$ | $4,4.10^{-22}$ | $4,4.10^{-27}$ |
| $P_2$ | $2,1.10^{-3}$ | $4,0.10^{-5}$ | $6,2.10^{-7}$ | $6,9.10^{-11}$ | $7,0.10^{-15}$ | $7,0.10^{-19}$ | $7,0.10^{-23}$ |

## Revendications

1. Système de transmission de données numériques par paquets comprenant :
— des moyens d'émission aptes à former des paquets comprenant un préambule formé notamment d'une séquence d'éléments binaires de récupération de rythme suivie d'une combinaison d'éléments binaires appelée mot unique,
— des moyens de réception comprenant notamment un décodeur apte à détecter la présence d'un mot unique dans les signaux reçus,
caractérisé en ce que :

A) les moyens d'émission sont aptes à former des mots uniques pris dans une famille de mots ayant chacun 2 n éléments binaires et étant formés d'un mot M de n éléments binaires entre lesquels sont intercalés les n éléments binaires du mot complémentaire M, les éléments binaires de $\overline{M}$ étant décalés par rapport à ceux de M d'un nombre p de rangs, le choix de p définissant un mot unique de la famille ;

B) dans les moyens de réception, le détecteur de mot unique est unique et fonctionne avec n éléments binaires, ce détecteur étant apte à détecter les apparitions décalées de p rangs des mots M et $\overline{M}$ sur chaque séquence d'éléments binaires de rang pair et impair.

2. Système selon la revendication 1, caractérisé en ce que le détecteur de mot unique comprend :
a) des premiers moyens (33) à n éléments binaires pour calculer la distance de Hamming d entre le mot reçu et le mot attendu M,
b) un double registre à décalage (31, 32) pour diriger alternativement sur lesdits premiers moyens les éléments binaires de rang impair et de rang pair du mot reçu,
c) un circuit de comparaison (34) comprenant :
un comparateur (35) de d à n avec une sortie indiquant si $d = n$,
un comparateur (36) de d à 0 avec une sortie indiquant si $d = 0$,
un comparateur (37) de d à n − k, k étant un nombre d'erreurs toléré, avec une sortie indiquant si $d \geqslant n - k$,
un comparateur (38) de d à k avec une sortie indiquant si $d \leqslant k$.

3. Système de transmission de données numériques selon la revendication 1, caractérisé en ce que le mot M de n éléments binaires est formé d'une séquence pseudo-aléatoire d'éléments binaires.

4. Système de transmission de données numériques selon l'une quelconque des revendications 1 à 3, caractérisé en ce que les moyens d'émission utilisent une modulation de phase à 2 ou à 4 états et les moyens de réception une démodulation différentielle ou une démodulation cohérente suivie d'un décodage différentiel.

5. Système de transmission de données numériques selon l'une quelconque des revendications 1 à 4, caractérisé en ce que le détecteur de mot unique est apte à fonctionner selon l'un des deux modes suivants :
— mode recherche ou non synchronisé pour lequel le nombre d'erreurs k toléré est nul,
— mode synchronisé qui suit le mode recherche pour lequel $k \neq 0$.

6. Système de transmission de données numériques selon l'une quelconque des revendications 1 à 5, ce système comprenant une station de référence et des stations ordinaires, caractérisé en ce que la station de référence est équipée pour travailler avec un des mots uniques de référence de la forme ($\overline{M}$, M) et les stations ordinaires pour travailler avec un mot unique de données de la forme ($\overline{M}$, M).

## Claims

1. A transmission system for digital data packets which comprises :
— emitting means adapted to form packets which comprise a preamble formed from a sequence of binary elements for timing recovery followed by a combination of binary elements entitled « unique word », and
— receiving means especially comprising a decoder adapted to detect the presence of a unique word in a received signal,
characterized in that :

A) the emitting means are adapted to form unique words taken from a family of words each having 2 n binary elements and being formed from a word M having n binary elements between which are interposed the n binary elements of a complementary word M, the binary elements of $\overline{M}$ being shifted with respect to those of M by a number of places p, the choice of p defining a unique word of the family ; and

B) in the receiving means, the unique word detector is single and operates with n binary elements, said detector being adapted to detect the appearance, shifted by p places, of the words M and $\overline{M}$ in each sequence of binary elements of odd and even ranking.

2. System according to claim 1 characterized in that the unique word detector comprises :
a) a first means (33) having n binary elements for calculating the Hamming distance d between the received word and the delayed word M,
b) a double shift register (31, 32) to direct alternately to said first means the binary elements of the odd rank and the even rank of the received word, and

**0 037 770**

c) a comparison circuit (34) comprising
a comparator (35) of d with n with an output indicating if d = n,
a comparator (36) of d with 0 with an output indicating if d = 0,
a comparator (37) of d with n − k, k being a tolerable number of errors, with an output indicating if d ⩾ n − k, and
a comparator (38) of d with k with an output indicating if d ⩽ k.

3. Digital data transmission system according to claim 1 characterized in that the word M having n binary elements is formed from a pseudorandom sequence of binary elements.

4. Digital data transmission system according to any one of claims 1 to 3, characterized in that the emitting means employ 2- or 4-state phase modulation, and the receiving means employ differential demodulation, or coherent demodulation followed by differential decoding.

5. Digital data transmission system according to any one of claims 1 to 4, characterized in that the unique word detector is adapted to operate in one of the two following modes :
— search or non-synchronized mode in which the tolerable number of errors k is zero, and
— synchronized mode which follows the search mode in which k ≠ 0.

6. Digital data transmission system according to any one of claims 1 to 5, said system comprising a refererence station and ordinary stations, characterized in that the reference station is equipped to operate with (any) one of the unique reference words of the form ($\overline{M}$, M), and the ordinary stations operate with one unique word of data of the form ($\overline{M}$, M).

**Ansprüche**

1. System zum blockweisen Übertragen von numerischen Daten, mit
— Sendevorrichtungen zum Bilden von Blöcken, die einen Vorspann aufweisen, der insbesondere aus einer Folge binärer Elemente zur Taktfindung gebildet ist, gefolgt von einer Einheitswort genannten Kombination von binären Elementen,
— Empfangsvorrichtungen, die insbesondere einen zum Ermitteln des Vorliegens eines Einheitswortes bei den empfangenen Signalen geeigneten Detektor aufweisen,
dadurch gekennzeichnet, daß
A) sich die Empfangsvorrichtungen zum Bilden von Einheitsworten eignen, die einer Familie von Worten entnommen werden, von denen jedes 2n binäre Elemente aufweist und die aus einem Wort M von n binären Elementen gebildet sind, zwischen denen die n binären Elemente des komplementären Wortes $\overline{M}$ eingefügt sind, wobei die binären Elemente von $\overline{M}$ bezüglich denen von M um eine Anzahl p von Stellen verschoben sind und die Wahl von p ein Einheitswort der Familie definiert ;
B) bei den Empfangsvorrichtungen der Einheitswort-Detektor eindeutig ist und mit n binaren Elementen arbeitet, wobei dieser Detektor sich zum Ermitteln des um p Stellen verschobenen Auftretens der Worte M und $\overline{M}$ bei jeder Folge von binären Elementen gerader und ungerader Stelle eignet.

2. System nach Anspruch 1, dadurch gekennzeichnet, daß jeder Einheitswort-Detektor folgende Merkmale aufweist :
a) erste Vorrichtungen (33) mit n binären Elementen zum Berechnen der Hamming-Distanz d zwischen dem empfangenen Wort und dem erwarteten Wort M,
b) ein Doppel-Schieberegister (31, 32), um den ersten Vorrichtungen abwechselnd die binären Elemente ungerader und gerader Stelle des empfangenen Wortes zuzuführen,
c) eine Komparatorschaltung (34), die folgende Merkmale aufweist :
einen Komparator (35) von bis n, mit einem Ausgangssignal, falls d = n,
einen Komparator von d bis 0, mit einem Ausgangssignal, falls d = 0,
einen Komparator (37) von d bis n − k, wobei k eine Anzahl tolerierter Fehler bezeichnet, mit einem Ausgangssignal, falls d ⩾ n − k,
einen Komparator (38) von d bis K, mit einem Ausgangssignal, falls d ⩽ k.

3. System zum Übermitteln numerischer Daten nach Anspruch 1, dadurch gekennzeichnet, daß das Wort M von n binären Elementen aus einer Pseudo-Zufallsreihe binärer Elemente gebildet ist.

4. System zum Übermitteln numerischer Daten nach einem der Ansprüche 1 bis 3, dadurch gekennzeichnet, daß die Sendevorrichtungen eine Phasenmodulation mit zwei oder vier Zuständen und die Empfangsvorrichtungen eine differentielle Demodulation oder eine kohärente, von einer differentiellen Dekodierung gefolgte Demodulation verwenden.

5. System zum Übertragen numerischer Daten nach einem der Ansprüche 1 bis 4, dadurch gekennzeichnet, daß sich der Einheitswort-Detektor zum Arbeiten nach einem der beiden folgenden Modi eignet :
— such-Modus oder nicht synchronisierter Modus, für den die Anzahl k tolerierter Fehler gleich null ist,
— synchronisierter Modus, der auf den Such-Modus folgt, für den k ≠ 0 ist.

6. System zum Übermitteln numerischer Daten nach einem der Ansprüche 1 bis 5, wobei dieses System eine Referenz-Station und gewöhnliche Stationen aufweist, dadurch gekennzeichnet, daß die Referenz-Station zum Arbeiten mit einem Referenz-Einheitswort der Form ($\overline{M}$, M) und die gewöhnlichen Stationen zum Arbeiten mit einem Daten-Einheitswort der Form ($\overline{M}$, M) ausgestattet sind.

11

FIG.1

Multitrame

Paquets de référence    Paquets de données

Trame 0    Trame 1    Trame 2    Trame 14    Trame 15

FIG.2

Multitrame

Paquet de référence    Paquet de données

| S.R.R. | MU$_{ref}$ | V.S.S. |

| PRÉAMBULE | DONNÉES |

| S.R.R. | MU$_0$ | V.S.S. |

0 037 770

# FIG.3

# FIG.4

FIG.5

FIG.6

FIG.7

FIG.8

FIG.9

0 037 770